# EUROPÄISCHE PATENTSCHRIFT

(11) **EP 0 777 225 B1**
(45) Veröffentlichungstag und Bekanntmachung des Hinweises auf die Patenterteilung: **12.09.2001**
(21) Anmeldenummer: 96117746.6
(22) Anmeldetag: 06.11.1996
(51) Int. Cl.: G11B 7/26

(54) **Vorrichtung zum Laserstrahlbelichten eines kreisscheibenförmigen Substrates und Verfahren zum zentrischen Spannen eines kreisscheibenförmigen Substrates**
Device for laser beam exposure of a disc-shaped substrate and method of centrally clamping a disc-shaped substrate
Dispositif d'exposition à faisceau laser d'un substrat en forme de disque et procédé de fixation centrale d'un substrat en forme de disque

(30) Priorität: 28.11.1995 DE 19544281
(43) Veröffentlichungstag der Anmeldung: 04.06.1997
(73) Patentinhaber: Balzers und Leybold Deutschland Holding Aktiengesellschaft, 63450 Hanau (DE)
(72) Erfinder: Hensel, Bernd, 65760 Eschborn (DE); Feick, Eberhard, 81249 München (DE); Hofmann, Friedrich, 63654 Büdingen (DE); Richter, Franz, Dr., 82223 Eichenau (DE); Koop, Hermann, Dr., 30952 Ronnenberg (DE)
(74) Vertreter: Schlagwein, Udo, Dipl.-Ing.

(56) Entgegenhaltungen:
- US-A- 5 583 845
- PATENT ABSTRACTS OF JAPAN vol. 012, no. 016 (P-656), 19. Januar 1988 & JP 62 172558 A (NEC HOME ELECTRONICS LTD), 29. Juli 1987
- PATENT ABSTRACTS OF JAPAN vol. 013, no. 409 (P-931), 11. September 1989 & JP 01 149255 A (TOSHIBA CORP), 12. Juni 1989
- PATENT ABSTRACTS OF JAPAN vol. 009, no. 296 (P-407), 22. November 1985 & JP 60 131670 A (MATSUSHITA DENKI SANGYO KK), 13. Juli 1985
- PATENT ABSTRACTS OF JAPAN vol. 013, no. 271 (P-889), 22. Juni 1989 & JP 01 064161 A (NIPPON COLUMBIA CO LTD), 10. März 1989
- PATENT ABSTRACTS OF JAPAN vol. 013, no. 530 (P-966), 27. November 1989 & JP 01 217760 A (TOSHIBA CORP), 31. August 1989
- PATENT ABSTRACTS OF JAPAN vol. 010, no. 361 (P-523), 4. Dezember 1986 & JP 61 156547 A (CANON INC), 16. Juli 1986

## Beschreibung

Die Erfindung betrifft eine Vorrichtung zum Laserstrahlbelichten eines kreisscheibenförmigen Substrates, welche eine mit hoher Drehzahl umlaufende, vertikal angeordnete Spindel hat, die einen Drehteller zum Aufspannen des Substrates trägt, der einen geringeren Durchmesser hat als die Substrate, und die Mittel zum Zentrieren des Substrates auf dem Drehteller aufweist. Weiterhin betrifft die Erfindung ein Verfahren zum zentrischen Spannen eines kreisscheibenförmigen Substrates.

Beim Laserstrahlbelichten rotieren die meist als Master bezeichneten, kreisscheibenförmigen Substrate derzeit mit bis zu 7.200 Umdrehungen pro Minute. Deshalb ist es erforderlich, daß das jeweilige Substrat möglichst zentrisch auf dem Drehteller gespannt wird, damit keine Unwuchten auftreten. Diese würden zu Schwingungen führen und Spurfehler verursachen. Hierzu ist es bekannt, die Substrate mit einem mittigen Zentrierzapfen zu versehen, welcher in eine entsprechende, mittige Zentrierbohrung des Drehtellers eingreift. Solche Zentrierzapfen stören jedoch bei den nachfolgenden Arbeitsgängen, so daß man bestrebt ist, das Laserstrahlbelichten mit Substraten ohne Zentrierzapfen durchzuführen. Hinzu kommt, daß das Handhabungssystem, welches das jeweilige Substrat auf den Drehteller ablegt, sehr genau arbeiten muß, damit der Zentrierzapfen tatsächlich in die Zentrierbohrung gelangt, ohne daß es zu einem Verkanten kommt.

Es ist auch bekannt, die Zentrierung durch Zentrierstifte am Drehteller vorzunehmen, zwischen denen das Substrat gehalten wird. Die Zentrierung erfolgt dann durch die Außenmantelfläche des Substrates. Eine solche Außenzentrierung erfordert relativ viel Spiel und führt zu einem stark außermittigen Spannen, wenn der Rand des Substrates geringfügige Unregelmäßigkeiten aufweist. Solche Unregelmäßigkeiten in Form von Ausbrüchen kommen jedoch insbesondere bei wiederverwendeten Substraten relativ häufig vor.

Der Erfindung liegt das Problem zugrunde, eine Vorrichtung der eingangs genannten Art zu entwickeln, welche ein möglichst genau zentrisches Spannen von kreisscheibenförmigen Substraten erlaubt, ohne daß hierzu ein zentrischer Zentrierzapfen am Substrat oder gegen die Außenmantelfläche des Substrates anliegende Zentrierstifte erforderlich sind. Weiterhin soll ein Verfahren zum zentrischen Spannen kreisscheibenförmiger Substrate entwickelt werden.

Das erstgenannte Problem wird erfindungsgemäß dadurch gelöst, daß koaxial zum Drehteller ein konischer Ring höhenverfahrbar zwischen einer unteren und oberen Stellung angeordnet ist, welcher an seiner oberen Seite einen größeren Durchmesser und an seiner unteren Seite einen geringeren Durchmesser als das Substrat hat, und daß der konische Ring in seiner unteren Stellung Abstand von einem auf dem Drehteller aufliegenden Substrat hat, in seiner oberen Stellung jedoch das Substrat mit seiner Innenmantelfläche auf axialen Abstand zum Drehteller hält.

Bei einer solchen Vorrichtung kann man das jeweils zu spannende Substrat zunächst mit relativ groben Mittenabweichungen auf den Drehteller ablegen, so daß das hierzu vorgesehene automatische Handhabungssystem nicht mit besonders hoher Genauigkeit arbeiten muß. Nach der Ablage erfolgt dann ein sehr einfaches Zentrieren durch Hochheben des Substrates mittels des konischen Ringes und erneutes Ablegen auf den Drehteller. Erst danach wird gespannt. Da gemäß der Erfindung das Zentrieren beim Hochheben über die gesamte Umfangsfläche des Substrates erfolgt, beeinflussen einzelne Ausbrüche in der Umfangsfläche nicht die Zentriergenauigkeit. Weiterhin ist es gemäß der Erfindung nicht erforderlich, daß die Substrate bereits mit hoher Zentriergenauigkeit auf den Drehteller abgelegt werden.

Der erfindungsgemäße konische Ring kann zusätzlich zu seiner Zentrierfunktion noch die Funktion eines Fangkorbes erhalten, welcher das Substrat für den Fall auffängt, daß es sich vom Drehteller lösen und aufgrund der hohen Drehgeschwindigkeit davonfliegen sollte. Hierzu wird gemäß der Erfindung vorgesehen, daß der konische Ring in seiner unteren Stellung mit seinem oberen Rand über die Oberseite des auf dem Drehteller liegenden Substrates ragt. Hierdurch werden die bisher stets sehr hohen Reparaturkosten der Anlage für den Fall eines Freikommens eines Substrates vom Drehteller und der dadurch bedingten Zerstörung des Laserbelichtungssystems vermieden.

Das jeweilige Substrat kann beim Anheben allein durch sein Gewicht in dem konischen Ring zentriert werden. Möglich ist es jedoch auch, daß der konische Ring mit einer Rüttelvorrichtung versehen ist.

Alternativ kann man die Zentrierwirkung dadurch verbessern, daß die Spindel mit einer Rüttelvorrichtung versehen ist.

Das zweitgenannte Problem, nämlich die Schaffung eines Verfahrens zum zentrischen Spannen eines kreisförmigen Substrates auf einem Drehteller einer Laserstrahl-Belichtungsvorrichtung, wird erfindungsgemäß dadurch gelöst, daß das Substrat nach dem Auflegen auf den Drehteller mittels eines koaxial zum Drehteller angeordneten, konischen Rings dadurch geringfügig angehoben wird, daß die Kegelmantelfläche des konischen Ringes gegen die Umfangsfläche des Substrates gelangt und daß das Substrat anschließend durch Absenken des konischen Ringes erneut auf den Drehteller abgelegt und erst dann gespannt wird.

Eine solche Verfahrensweise erfordert zum Zentrieren keinen Zentrierzapfen am jeweiligen Substrat und führt auch dann zu einer hohen Zentriergenauigkeit, wenn die Substrate an ihrer Umfangsfläche Ausbrüche oder sonstige Unregelmäßigkeiten aufweisen. Weiterhin ist bei Anwendung des erfindungsgemäßen Verfahrens kein mit sehr hoher Genauigkeit arbeitendes Handhabungssystem zum Ablegen des jeweiligen Substrates auf den Drehteller erforderlich.

Falls es sich ergeben sollte, daß die Substrate allein durch ihr Gewicht sich beim Anheben mittels des konischen Ringes nicht von selbst zentrieren, kann man dadurch nachhelfen, daß der konische Ring im das Substrat abgehobenen Zustand gerüttelt wird oder daß der Drehteller während des Absenkens des konischen Ringes gerüttelt wird.

Die Erfindung läßt verschiedene Ausführungsformen zu. Zu ihrer weiteren Verdeutlichung ist eine erfindungsgemäße Vorrichtung in der Zeichnung stark vereinfacht dargestellt und wird nachfolgend beschrieben. Diese zeigt in
- Fig.1: eine Seitenansicht eines Teilbereichs einer Vorrichtung nach der Erfindung,
- Fig.2: einen Drehteller der Vorrichtung mit Zentriervorrichtung im abgehobenen Zustand eines Substrates.

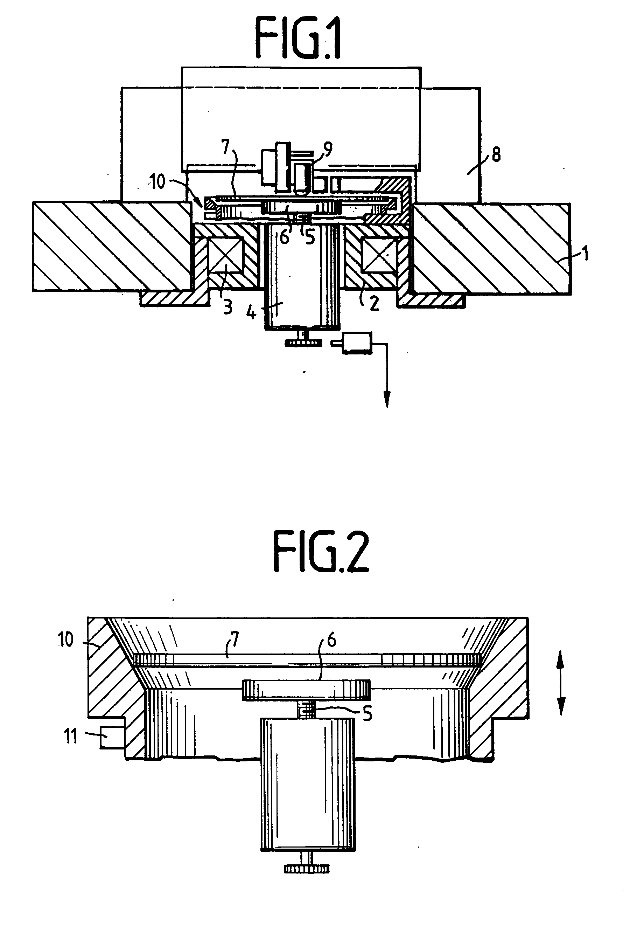

Die Figur 1 zeigt einen Arbeitstisch 1, in welchem ein Schlitten 2 auf Luftlagern 3 quer zur Zeichnungsebene verfahrbar ist. Der Schlitten 2 trägt einen Motor 4, welcher mit einer vertikal ausgerichteten Spindel 5 einen Drehteller 6 antreibt. Auf diesem Drehteller 6 liegt ein kreisscheibenförmiges Substrat 7, welches dort auf übliche Weise, beispielsweise mittels Vakuum, gespannt ist.

Über den Arbeitstisch 1 führt eine Brücke 8, welche ein Laserstrahl-Objektiv 9 haltert.

Wichtig für die Erfindung ist eine als Zentriervorrichtung dienender, konischer Ring 10, welcher koaxial zum Drehteller 6 höhenverfahrbar angeordnet ist. Vor dem Laserstrahlbelichten wird das Substrat 7 zunächst mittels einem üblichen, nicht gezeigten Handhabungssystem auf dem Drehteller 6 abgelegt. Dabei nimmt der konische Ring 10 seine in Figur 1 gezeigte, untere Position ein. Anschließend fährt man den Ring 10 hoch in seine in Figur 2 dargestellte obere Position. Dabei gelangt er mit seiner konischen Innenmantelfläche gegen die Umfangsfläche des Substrates 7 und hebt es dadurch unter gleichzeitigem Zentrieren vom Drehteller 6 ab. Diese Zentrierwirkung kann durch eine an dem konischen Ring angreifende Rüttelvorrichtung 11 verbessert werden.

Die Figuren 1 und 2 lassen weiterhin erkennen, daß der konische Ring 10 so bemessen ist, daß er auch in seiner unteren Stellung mit seinem oberen Rand das Substrat 7 nach oben hin überragt. Dadurch wirkt der konische Ring als Sicherheitsfangkorb, welcher das Substrat 7 auffängt, wenn dieses vom Drehteller 6 freikommen sollte.

### Bezugszeichenliste

- 1: Arbeitstisch
- 2: Schlitten
- 3: Luftlager
- 4: Motor
- 5: Spindel

- 6: Drehteller
- 7: Substrat
- 8: Brücke
- 9: Laserstrahl-Objektiv
- 10: konischer Ring

- 11: Rüttelvorrichtung

## Patentansprüche

1. Vorrichtung zum Laserstrahlbelichten eines kreisscheibenförmigen Substrates, welche eine mit hoher Drehzahl umlaufende, vertikal angeordnete Spindel hat, die einen Drehteller zum Aufspannen des Substrates trägt, der einen geringeren Durchmesser hat als die Substrate, und die Mittel zum Zentrieren des Substrates auf dem Drehteller aufweist, **dadurch gekennzeichnet, daß** koaxial zum Drehteller (6) ein konischer Ring (10) höhenverfahrbar zwischen einer unteren und oberen Stellung angeordnet ist, welcher an seiner oberen Seite einen größeren Durchmesser und an seiner unteren Seite einen geringeren Durchmesser als das Substrat (7) hat, und daß der konische Ring (10) in seiner unteren Stellung Abstand von einem auf dem Drehteller (6) aufliegenden Substrat (7) hat, in seiner oberen Stellung jedoch das Substrat (7) mit seiner Innenmantelfläche auf axialen Abstand zum Drehteller (6) hält.

2. Vorrichtung nach Anspruch 1, **dadurch gekennzeichnet, daß** der konische Ring (10) in seiner unteren Stellung mit seinem oberen Rand über die Oberseite des auf dem Drehteller (6) liegenden Substrates (7) ragt.

3. Vorrichtung nach den Ansprüchen 1 oder 2, **dadurch gekennzeichnet, daß** der konische Ring (10) mit einer Rüttelvorrichtung (11) versehen ist.

4. Vorrichtung nach den Ansprüchen 1 oder 2, **dadurch gekennzeichnet, daß** die Spindel (5) mit einer Rüttelvorrichtung (11) versehen ist.

5. Verfahren zum zentrischen Spannen eines kreisförmigen Substrates auf einem Drehteller einer Laserstrahl-Belichtungsvorrichtung, **dadurch gekennzeichnet, daß** das Substrat nach dem Auflegen auf den Drehteller mittels eines koaxial zum Drehteller angeordneten, konischen Rings dadurch geringfügig angehoben wird, daß die Kegelmantelfläche des konischen Ringes gegen die Umfangsfläche des Substrates gelangt und daß das Substrat anschließend durch Absenken des konischen Ringes erneut auf den Drehteller abgelegt und erst dann gespannt wird.

6. Verfahren nach Anspruch 5, **dadurch gekennzeichnet, daß** der konische Ring im das Substrat abgehobenen Zustand gerüttelt wird.

7. Verfahren nach Anspruch 5, **dadurch gekennzeichnet, daß** der Drehteller während des Absenkens des konischen Ringes gerüttelt wird.

## Claims

1. A device for laser beam exposure of a circular disk-shaped substrate, having a vertically arranged spindle revolving at high speed, which spindle carries a rotary table for clamping of the substrate, said table being smaller in diameter than the substrates, and comprises means for centring the substrate on the rotary table, **characterised in that** a conical ring (10) is arranged coaxially with the rotary table (6) so as to be vertically displaceable between a lower position and an upper position, which ring (10) has a larger diameter at its upper side and a smaller diameter at its lower side than the substrate (7), and in that the conical ring (10), in its lower position, is spaced from a substrate (7) lying on the rotary table (6) but, in its upper position, holds the substrate (7) with its inner circumferential surface at an axial distance from the rotary table (6).

2. A device according to claim 1, **characterised in that,** in its lower position, the conical ring (10) projects with its upper edge above the top of the substrate (7) lying on the rotary table (6).

3. A device according to claims 1 or 2, **characterised in that** the conical ring (10) is provided with a vibrating device (11).

4. A device according to claims 1 or 2, **characterised in that** the spindle (5) is provided with a vibrating device (11).

5. A method for centred clamping of a circular substrate on a rotary table of a laser beam exposure device, **characterised in that,** after positioning on the rotary table, the substrate is lifted slightly by means of a conical ring arranged coaxially with the rotary table as a result of the conical surface of the conical ring coming into contact with the circumferential surface of the substrate and in that the substrate is then laid back down on the rotary table by lowering of the conical ring and only then is it clamped.

6. A method according to claim 5, **characterised in that** the conical ring is vibrated when the substrate is in the raised state.

7. A method according to claim 5, **characterised in that** the rotary table is vibrated during lowering of the conical ring.

## Revendications

1. Dispositif pour l'exposition, avec un faisceau laser, d'un substrat en forme de disque circulaire, qui possède une broche qui tourne avec une vitesse de rotation élevée et est disposée verticalement et porte un plateau rotatif servant à porter le substrat et possédant un diamètre inférieur à celui du substrat, et qui comporte des moyens pour centrer le substrat sur le plateau rotatif, **caractérisé en ce qu'**un anneau conique (10) est disposé coaxialement au plateau rotatif (6) de manière à être réglable en hauteur entre une position inférieure et une position supérieure et possède au niveau de son côté supérieur un diamètre supérieur à celui du substrat (7) et au niveau de son côté inférieur un diamètre inférieur à celui du substrat (7) et que dans sa position inférieure, l'anneau conique (10) est situé à distance d'un substrat (7) appliqué sur le plateau rotatif (6), mais, dans sa position supérieure, maintient le substrat (7) avec sa surface enveloppe intérieure à une certaine distance axiale du plateau rotatif (6).

2. Dispositif selon la revendication 1, **caractérisé en ce que** dans sa position inférieure l'anneau conique (10) fait saillie par son bord supérieur au-dessus de la face supérieure du substrat (7) situé sur le plateau rotatif (6).

3. Dispositif selon la revendication 1 ou 2, **caractérisé en ce que** l'anneau conique (10) est équipé d'un dispositif vibrant (11).

4. Dispositif selon les revendications 1 ou 2, **caractérisé en ce que** la broche (5) est équipée d'un dispositif vibrant (11).

5. Procédé pour serrer d'une manière centrée un substrat de forme circulaire sur un plateau rotatif d'un dispositif d'exposition à laser, **caractérisé en ce qu'**après sa mise en place sur le plateau rotatif le substrat est légèrement soulevé à l'aide d'un anneau conique disposé coaxialement au plateau rotatif, par le fait que la surface enveloppe conique de l'anneau conique parvient contre la surface circonférentielle du substrat, et que le substrat est ensuite à nouveau déposé sur le plateau rotatif par abaissement de l'anneau conique et alors seulement est serré.

6. Procédé selon la revendication 5, **caractérisé en ce que** l'anneau conique est amené à vibrer lorsque le substrat est à l'état soulevé.

7. Procédé selon la revendication 5, **caractérisé en ce que** le plateau rotatif est amené à vibrer pendant l'abaissement de l'anneau conique.
